# FASCICULE DE BREVET EUROPEEN

(11) **EP 4 385 843 B1**
(45) Date de publication et mention de la délivrance du brevet: **09.09.2026**
(21) Numéro de dépôt: 23216449.1
(22) Date de dépôt: 13.12.2023
(51) Int. Cl.: B60W 10/08, B60W 30/188, B60L 15/20, B60W 50/10, B60W 30/18, B60W 50/00

(54) **PROCÉDÉ DE COMPENSATION DE FORCES RÉSISTIVES APPLIQUÉES À UN VÉHICULE**
VERFAHREN ZUR KOMPENSATION VON AUF EIN FAHRZEUG AUFGEBRACHTEN WIDERSTANDSKRÄFTEN
METHOD FOR COMPENSATING RESISTIVE FORCES APPLIED TO A VEHICLE

(30) Priorité: 14.12.2022 FR 2213291
(43) Date de publication de la demande: 19.06.2024
(73) Titulaire: Ampere SAS, 92100 Boulogne-Billancourt (FR)
(72) Inventeur: DEROSIER, Quentin, 91510 Lardy (FR); LEURET, Arnaud, 91510 Lardy (FR); PANHARD, Thibault, 91510 Lardy (FR); ZAIDAN-MARTINELLI, Breno, 91510 Lardy (FR)
(74) Mandataire: Renault Group

(56) Documents cités:
- EP-A2- 1 045 121
- CN-A- 114 872 705
- US-A1- 2007 162 210
- US-A1- 2022 297 691

## Description

### Domaine technique

La présente invention concerne un procédé de compensation de forces résistives appliquées à un véhicule.

En particulier, la présente invention concerne un procédé de compensation du ressenti de l'accélération pour un enfoncement de la pédale d'accélérateur donné.

De manière générale, l'invention s'applique à tout véhicule équipé d'un moteur électrique, et en particulier les véhicules automobiles à traction hybride ou électrique.

### Techniques antérieures

Les véhicules automobiles répondent historiquement à une loi de commande de couple à leurs roues dite « en boucle ouverte ».

Plus précisément, lorsque le conducteur d'un véhicule enfonce la pédale d'accélérateur dudit véhicule, un calculateur du véhicule et/ou du moteur du véhicule interprète l'enfoncement comme une volonté d'accélérer, également appelée la « volonté conducteur ». La valeur représentative de l'enfoncement est traduite en une consigne de pourcentage de puissance maximale du moteur à son régime courant, correspondant, au rendement de la transmission près, à la puissance fournie au roues motrices pour l'entraînement du véhicule, puis, en une consigne de couple du moteur. Cette consigne de couple moteur correspond également à une force motrice à appliquer aux roues, en tenant compte du rayon dynamique des pneus.

Cependant, un véhicule automobile n'est généralement doté d'aucun moyen capable de surveiller les conditions de roulage et d'adapter le couple appliqué selon ces conditions. Ce manque d'adaptation peut entrainer plusieurs situations désagréables du point de vue du conducteur, qui correspondent toutes au fait que le véhicule ne se comporte pas, pour un même enfoncement de la pédale d'accélérateur, de la même manière selon la nature de la route, et en particulier selon les forces résistives appliquées au véhicule. Une force résistive identifiée est par exemple due à l'inclinaison de la pente.

Ainsi, pour un même enfoncement de la pédale d'accélérateur, un conducteur aura des sensations d'accélération ou de décélération différentes selon la pente dans laquelle il se trouve.

D'autres forces résistives sont mises en évidence dans le principe fondamental de la dynamique ci-dessous, appliqué au véhicule : $ma = \frac{{C}_{mot}}{r} \frac{{ω}_{mot}}{{ω}_{roue}} - {F}_{a} - {F}_{ro} - {F}_{p} - {F}_{inert}$ avec m la masse du véhicule, *a* son accélération, $\frac{{C}_{mot}}{r} \frac{{ω}_{mot}}{{ω}_{roue}}$ la force appliquée aux roues du véhicule, Cₘₒₜ le couple moteur, r le rayon d'une roue, ωᵣₒᵤₑ la vitesse de rotation de la roue, ωₘₒₜ la vitesse de rotation du moteur, Fₐ la force de résistance aérodynamique, Fᵣₒ la force de résistance liée au roulement, Fₚ la force de résistance liée à la pente, et Fᵢₙₑᵣₜ la force de résistance liée à l'inertie du véhicule.

US2007/162210A1 divulgue un appareil de commande conçu pour augmenter une force d'entraînement de véhicule pendant une conduite en montée d'un véhicule afin d'obtenir sensiblement la même valeur d'accélération du véhicule pendant le roulage sur route en montée que celle pendant le roulage sur route plate. CN114872705A divulgue un schéma de contrôle de l'accélération d'un véhicule électrique afin d'améliorer le contrôle de vitesse dudit véhicule en montée ou en descente.

### Exposé de l'invention

La présente invention a donc pour but de pallier les inconvénients précités et de fournir à un conducteur de véhicule, et pour un enfoncement de la pédale d'accélérateur donné, le même ressenti d'accélération ou de décélération indépendamment de la pente ou de la vitesse à laquelle le véhicule se trouve.

La présente invention a pour objet un procédé de compensation de forces résistives appliquées à un véhicule comprenant un moteur électrique, le procédé comprenant les étapes suivantes :
- Conversion d'une valeur représentative de l'enfoncement d'une pédale d'accélération en une force de référence ;
- Application de la force de référence à au moins une roue motrice du véhicule ;
- Détermination d'une accélération de référence par division de la force de référence par la masse du véhicule ;
- Mesure de l'accélération effective du véhicule ;
- Calcul d'une force de correction à partir des accélérations de référence et effective ; et
- Application de la force de correction à ladite roue.

Ainsi, les forces résistives sont compensées et le conducteur aura le même ressenti d'accélération ou de décélération pour un même enfoncement de la pédale d'accélérateur. En particulier, cet avantage est également obtenu dans un mode de conduite du véhicule dans lequel le conducteur maitrise la décélération en levant légèrement le pied de la pédale d'accélérateur. Un tel mode est parfois appelé « One pedal » en termes anglo-saxons.

Dans un mode de mise en œuvre, l'étape de calcul comprend une sous-étape de détermination d'une erreur d'accélération par soustraction entre l'accélération de référence et l'accélération effective.

Avantageusement, l'étape de calcul comprend une sous-étape de filtrage des accélérations de référence et effective avant la sous-étape de détermination d'une erreur d'accélération.

Avantageusement, l'étape de calcul comprend une sous-étape de calcul de la force de correction à partir de l'erreur d'accélération et à l'aide d'un régulateur PID et/ou d'un régulateur « Flou », et/ou d'un régulateur MPC.

Dans un mode de mise en œuvre, le procédé comprend une étape de détection d'un changement de sens du levier de vitesses du véhicule pour passer de la marche avant à la marche arrière ou réciproquement, et une étape d'application d'un facteur -1 à la force de correction lorsqu'un tel changement de sens est détecté.

Dans un mode de mise en œuvre, l'étape de calcul comprend une sous-étape de limitation de la valeur de la force de correction en fonction de la vitesse et/ou de l'accélération du véhicule.

Selon l'invention, l'étape d'application de la force de correction à la roue est soumise à au moins une condition comprenant l'atteinte d'une valeur représentative particulière d'enfoncement d'une pédale de frein et/ou l'atteinte d'un état de traction du véhicule particulier et/ou l'activation d'un mode particulier d'aide à la conduite.

Toujours selon l'invention, si l'au moins une condition n'est pas respectée, le procédé comprend une étape de mise à zéro de la valeur de la force de correction appliquée et une étape de mémorisation de la dernière valeur non nulle de force de correction appliquée, cette dernière valeur non nulle étant à nouveau appliquée une fois que l'au moins une condition est à nouveau respectée.

La présente invention a également pour objet un programme d'ordinateur comprenant des instructions qui, lorsque le programme est exécuté par un ordinateur, conduisent celui-ci à mettre en œuvre les étapes du procédé tel que défini précédemment.

La présente invention a encore pour objet un véhicule automobile comprenant un ordinateur et un support de données lisible par l'ordinateur, le programme d'ordinateur tel que défini précédemment étant enregistré sur le support de données.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1]
   est une représentation schématique des étapes d'un procédé de compensation de forces résistives selon l'invention ; et
[Fig 2]
   est une représentation schématique des sous-étapes d'une étape de calcul d'une force de correction du procédé selon l'invention.

### Exposé détaillé d'au moins un mode de réalisation

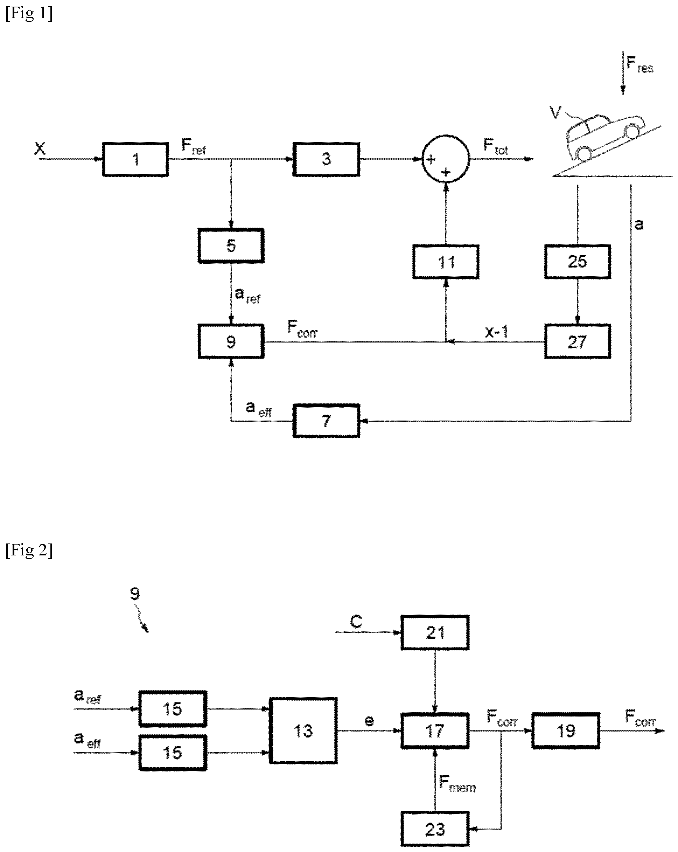

On a représenté schématiquement sur la figure 1 un procédé de compensation de forces résistives appliquées à un véhicule V.

Le véhicule V comprend un moteur électrique et un levier de vitesse. Il s'agit par exemple d'un véhicule automobile hybride ou électrique et comprenant au moins une roue motrice.

Le procédé est mis en œuvre pour une dynamique du véhicule V résumée par le principe fondamental de la dynamique suivant : $ma = {F}_{tot} + {F}_{res}$ avec m la masse du véhicule, *a* son accélération, Fₜₒₜ la force totale appliquée aux roues du véhicule par le moteur électrique, Fᵣₑₛ la force de résistance totale, qui comprend par exemple les forces de résistances détaillées précédemment, à savoir la force Fₐ de résistance aérodynamique, Fᵣₒ la force de résistance liée au roulement, Fₚ la force de résistance liée à la pente, et Fᵢₙₑᵣₜ la force de résistance liée à l'inertie du véhicule.

Le procédé comprend une étape 1 de conversion d'une valeur X représentative de l'enfoncement d'une pédale d'accélération en une force de référence F_{ref}.

Cette étape 1 utilise la transposition de l'enfoncement de la pédale d'accélérateur par le conducteur du véhicule en une valeur X représentative dudit enfoncement de la pédale d'accélération.

La conversion est effectuée selon une loi de commande propre au mode de conduite du véhicule. Par exemple, un enfoncement de la pédale d'accélérateur est interprété comme une volonté de la part du conducteur d'avancer plus rapidement, et est donc converti en une force de référence destinée à entrainer le véhicule vers l'avant. A l'inverse, lorsque le conducteur lève le pied de la pédale d'accélérateur, cette action est interprétée comme une volonté de la part du conducteur de ralentir, et est donc converti en une force de référence destinée à freiner le véhicule. La force de référence peut également être nulle de sorte que le véhicule est en « roue libre » et n'est soumis qu'aux forces résistives.

On effectue ensuite une étape 3 d'application de la force de référence à au moins une roue motrice du véhicule V.

Cette étape 3 est plus précisément réalisée en appliquant un couple de référence C_{ref} à la roue de la forme : ${C}_{ref} = {F}_{ref} \times r$ avec F_{ref} la force de référence appliquée aux roues du véhicule, C_{ref} le couple de référence, et r le rayon d'une roue.

Dans le même temps, on effectue une étape 5 de détermination d'une accélération de référence *a*_{ref} par division de la force de référence F_{ref} par la masse m du véhicule, tel que : ${a}_{ref} = \frac{{F}_{ref}}{m}$

Cette accélération de référence est une accélération représentative de l'accélération voulue par le conducteur du véhicule lors de son enfoncement de la pédale d'accélérateur.

D'autre part, on effectue une étape 7 de mesure de l'accélération effective du véhicule *a*_{eff}. Cette accélération effective est par exemple obtenue par mesure directe à l'aide d'un accéléromètre, ou par calcul indirect à partir de la vitesse, ou par des données GPS.

A partir de ces accélérations effectives et de référence *a*_{eff} et *a*_{ref}, on effectue une étape 9 de calcul d'une force de correction *F*_{corr}.

Enfin, on effectue une étape 11 d'application de la force de correction à l'au moins une roue motrice, de la même manière que pour la force de référence, la force de référence et la force de correction étant additionnée.

La force de correction est une force additionnelle exercée à la roue et permettant de compenser les forces résistives mises en évidence par la différence de valeur entre les accélérations effectives et de référence *a*_{eff} et *a*_{ref}.

Ainsi, au lieu d'utiliser un système d'accélération en boucle ouverte qui oblige le conducteur à appuyer davantage sur la pédale d'accélérateur pour compenser une force résistive sur le véhicule, le procédé selon l'invention propose une boucle fermée permettant d'adapter la force totale appliquée aux roues du véhicule.

On a représenté schématiquement sur la figure 2 des sous-étapes de l'étape 9 de calcul de la force de correction.

De manière plus précise, l'étape 9 de calcul de la force de correction comprend par exemple une sous-étape 13 de détermination d'une erreur d'accélération e par soustraction entre l'accélération de référence et l'accélération effective. Ainsi : $e = {a}_{ref} - {a}_{eff}$

Optionnellement, la sous-étape 13 de détermination de l'erreur d'accélération est précédée d'une sous-étape 15 de filtrage des accélérations effective et de référence. Ce filtrage est plus particulièrement une synchronisation temporelle des deux valeurs d'accélération effective et de référence.

En outre, l'étape 9 de calcul de la force de correction comprend une sous-étape 17 de calcul de la force de correction à partir de l'erreur d'accélération. Plus précisément, la sous-étape 17 permet de calculer la force de correction de manière à réduire l'erreur d'accélération.

Cette sous-étape 17 de calcul est réalisée avec un régulateur, par exemple un régulateur PID et/ou un régulateur « Flou » (Fuzzy en termes anglo-saxons), et/ou un régulateur MPC (« Model Predictive Control » en termes anglo-saxons.

Optionnellement, une sous-étape 19 de limitation de la valeur de la force de correction est effectuée. La limitation est par exemple effectuée en fonction de la vitesse et/ou de l'accélération du véhicule. La limitation peut être effectuée par filtrage linéaire, ou par filtrage non linéaire du premier ordre, ou encore du second ordre.

La limitation permet notamment de limiter la dynamique du régulateur ainsi que la valeur absolue de la force de correction.

En particulier, cette sous-étape 19 de limitation permet de ne pas appliquer une trop importante force de correction, ou des changements trop rapides de force de correction, qui pourraient surprendre le conducteur du véhicule et être désagréable pour sa conduite.

Pour la limitation en valeur absolue de la force de correction, il est par exemple possible de limiter à 3000 Newton la force de correction pour des vitesses du véhicule allant de 0 à 7 km/h, puis de limiter la force de correction de plus en plus au fur et à mesure que la vitesse du véhicule est élevée : par exemple limiter la force de correction à 1500 Newton pour 15km/h de vitesse.

Optionnellement, l'étape 11 d'application de la force de correction à la roue est soumise à au moins une condition C.

L'au moins une condition comprend par exemple l'atteinte d'une valeur représentative particulière d'enfoncement d'une pédale de frein et/ou l'atteinte d'un état de traction particulier du véhicule et/ou l'activation d'un mode particulier d'aide à la conduite. Un mode particulier d'aide à la conduite est par exemple le mode « limiteur de vitesse ».

Pour cela, l'étape 9 de calcul de la force de correction comprend une sous-étape 21 de vérification de l'au moins une condition C.

A la suite de cette sous-étape 21, si l'au moins une condition n'est pas respectée, le procédé comprend une étape de mise à zéro de la valeur de la force de correction appliquée (étape non représentée) et une étape 23 de mémorisation de la dernière valeur non nulle *F*ₘₑₘ de force de correction appliquée est effectuée.

La dernière valeur non nulle est à nouveau appliquée à la roue motrice une fois que l'au moins une condition est à nouveau respectée. Ce mécanisme permet au véhicule d'avoir une réaction optimale lors d'un redémarrage en côte par exemple.

Optionnellement, le procédé comprend en outre une étape 25 de détection d'un changement de sens du levier de vitesse du véhicule et une étape 27 d'application d'un facteur -1 à la force de correction calculée lorsqu'un tel changement de sens est détecté, c'est-à-dire, lorsqu'on passe de la marche avant à la marche arrière ou réciproquement, notamment, dans le cas d'un véhicule équipé d'une boîte de vitesses automatique, passage du levier de la position « D » (acronyme en langue anglaise pour « drive ») à la position « R » (acronyme en langue anglaise pour « reverse ») ou réciproquement. Cela permet de faciliter les manœuvres dans une pente, lorsque lesdites manœuvres impliquent au véhicule de changer de sens de mouvement.

Dans un mode de mise en œuvre spécifique, ce procédé est une méthode mise en œuvre par ordinateur.

L'invention a de plus pour objet un programme d'ordinateur comprenant des instructions qui mettent en œuvre le procédé tel que décrit précédemment lorsqu'il est exécuté par ordinateur.

Un ordinateur exécutant le programme est par exemple l'ordinateur de bord du véhicule ou l'ordinateur du groupe motopropulseur comprenant le moteur électrique.

Le véhicule V comprend par exemple un ordinateur et un support de données lisible par ledit ordinateur, le support de données ayant enregistré ledit programme d'ordinateur.

## Revendications

1. Procédé de compensation de forces résistives (*F*ᵣₑₛ) appliquées à un véhicule (V) comprenant un moteur électrique, le procédé comprenant les étapes suivantes :
- Conversion (étape 1) d'une valeur représentative (X) de l'enfoncement d'une pédale d'accélération en une force de référence (*F*_{ref}) ;
- Application (étape 3) de la force de référence (*F*_{ref}) à au moins une roue motrice du véhicule (V) ;
- Détermination (étape 5) d'une accélération de référence (*a*_{ref}) par division de la force de référence (*F*_{ref}) par la masse (m) du véhicule (V) ;
- Mesure (étape 7) de l'accélération effective (*a*_{eff}) du véhicule (V) ;
- Calcul (étape 9) d'une force de correction (*F*_{corr}) à partir des accélérations de référence et effective (*a*_{ref} ; *a_{eff}*) ; et
- Application (étape 11) de la force de correction (*F*_{corr}) à ladite roue ;
le procédé étant **caractérisé en ce que** l'étape (11) d'application de la force de correction (F_corr) à la roue est soumise à au moins une condition comprenant l'atteinte d'une valeur représentative particulière d'enfoncement d'une pédale de frein et/ou l'atteinte d'un état de traction du véhicule particulier et/ou l'activation d'un mode particulier d'aide à la conduite, et **en ce que** le procédé comprend, si l'au moins une condition n'est pas respectée, une étape de mise à zéro de la valeur de la force de correction appliquée et une étape (23) de mémorisation de la dernière valeur non nulle de force de correction appliquée, cette dernière valeur non nulle (F_mem) étant à nouveau appliquée une fois que l'au moins une condition est à nouveau respectée.

2. Procédé selon la revendication 1, dans lequel l'étape (9) de calcul comprend une sous-étape (13) de détermination d'une erreur d'accélération (e) par soustraction entre l'accélération de référence (*a_{ref}*) et l'accélération effective (*a*_{eff}).

3. Procédé selon la revendication 2, dans lequel l'étape (9) de calcul comprend une sous-étape (15) de filtrage des accélérations de référence et effective (*a*_{ref} ; *a_{eff}*) avant la sous-étape (13) de détermination d'une erreur d'accélération (e).

4. Procédé selon l'une des revendications 2 et 3, dans lequel l'étape (9) de calcul comprend une sous-étape (17) de calcul de la force de correction (*F*_{corr}) à partir de l'erreur d'accélération (e) et à l'aide d'un régulateur PID et/ou d'un régulateur « Flou », et/ou d'un régulateur MPC.

5. Procédé selon l'une quelconque des revendications 1 à 4, comprenant une étape (25) de détection d'un changement de sens du levier de vitesse du véhicule (V) pour passer de la marche avant à la marche arrière ou réciproquement, et une étape (27) d'application d'un facteur -1 à la force de correction (*F*_{corr}) lorsqu'un tel changement de sens est détecté.

6. Procédé selon l'une quelconque des revendications 1 à 5, dans lequel l'étape (9) de calcul comprend une sous-étape (19) de limitation de la valeur de la force de correction (*F*_{corr}) en fonction de la vitesse et/ou de l'accélération du véhicule.

7. Programme d'ordinateur comprenant des instructions qui, lorsque le programme est exécuté par un ordinateur, conduisent celui-ci à mettre en œuvre les étapes du procédé selon l'une quelconque des revendications 1 à 6.

8. Véhicule automobile (V) comprenant un ordinateur et un support de données lisible par l'ordinateur, le programme d'ordinateur selon la revendication 7 étant enregistré sur le support de données.

## Patentansprüche

1. Verfahren zur Kompensation von Widerstandskräften (Fᵣₑₛ), die auf ein Fahrzeug (V) mit einem Elektromotor einwirken, wobei das Verfahren die folgenden Schritte aufweist:
- Umrechnen (Schritt 1) eines Wertes (X), der den Druck auf ein Gaspedal angibt, in eine Referenzkraft (F_{ref});
- Anwenden (Schritt 3) der Referenzkraft (F_{ref}) auf mindestens ein Antriebsrad des Fahrzeugs (V);
- Bestimmen(Schritt 5) einer Referenzbeschleunigung (α_{ref}) durch Division der Referenzkraft (F_{ref}) durch die Masse (m) des Fahrzeugs (V);
- Messen (Schritt 7) der effektiven Beschleunigung (α_{eff}) des Fahrzeugs (V);
- Berechnen (Schritt 9) einer Korrekturkraft (F_{Corr}) auf der Grundlage der Referenzbeschleunigung und der effektiven Beschleunigung (α_{ref} ; α_{eff}) und
- Anwenden (Schritt 11) der Korrekturkraft (F_{Corr}) auf das Rad;
wobei das Verfahren **dadurch gekennzeichnet ist, dass** der Schritt (11) des Anwendens der Korrekturkraft (F_Corr) auf das Rad mindestens einer Bedingung unterliegt, die das Erreichen eines bestimmten Wertes, der den Druck auf ein Bremspedal angibt, und/oder das Erreichen eines bestimmten Traktionszustands des betreffenden Fahrzeugs und/oder das Aktivieren eines bestimmten Fahrassistenzmodus aufweist, und dass das Verfahren, falls die mindestens eine Bedingung nicht erfüllt ist, einen Schritt zum Zurücksetzen des Wertes der angewendeten Korrekturkraft auf Null und einen Schritt (23) zum Speichern des letzten von Null verschiedenen Wertes der angewendeten Korrekturkraft aufweist, wobei dieser letzte von Null verschiedene Wert (F_mem) erneut angewendet wird, sobald die mindestens eine Bedingung wieder erfüllt ist.

2. Verfahren nach Anspruch 1, wobei der Berechnungsschritt (9) einen Unterschritt (13) zum Bestimmen eines Beschleunigungsfehlers (e) durch Subtraktion der Referenzbeschleunigung (α_{ref}) von der effektiven Beschleunigung (α_{eff}) aufweist.

3. Verfahren nach Anspruch 2, wobei der Berechnungsschritt (9) einen Unterschritt (15) zum Filtern der Referenzbeschleunigung und der effektiven Beschleunigung (α_{ref} ; α_{eff}) vor dem Unterschritt (13) zum Bestimmen eines Beschleunigungsfehlers (e) aufweist.

4. Verfahren nach einem der Ansprüche 2 und 3, wobei der Berechnungsschritt (9) einen Unterschritt (17) zum Berechnen der Korrekturkraft (F_{Corr}) auf der Grundlage des Beschleunigungsfehlers (e) und unter Verwendung eines PID-Reglers und/oder eines "Fuzzy"-Reglers und/oder eines MPC-Reglers aufweist.

5. Verfahren nach einem der Ansprüche 1 bis 4 mit einem Schritt (25) zum Erfassen einer Richtungsänderung des Fahrhebels des Fahrzeugs (V), um vom Vorwärtsgang in den Rückwärtsgang oder umgekehrt zu gelangen, und einem Schritt (27) zum Anwenden eines Faktors -1 auf die Korrekturkraft (F_{Corr}), wenn eine solche Richtungsänderung erkannt wird.

6. Verfahren nach einem der Ansprüche 1 bis 5, wobei der Berechnungsschritt (9) einen Unterschritt (19) zum Begrenzen des Wertes der Korrekturkraft (F_{Corr}) in Abhängigkeit von der Geschwindigkeit und/oder Beschleunigung des Fahrzeugs aufweist.

7. Computerprogramm, das Anweisungen aufweist, die, wenn das Programm von einem Computer ausgeführt wird, diesen dazu veranlassen, die Schritte des Verfahrens nach einem beliebigen der Ansprüche 1 bis 6 umzusetzen.

8. Kraftfahrzeug (V) mit einem Computer und einem computerlesbaren Datenträger, wobei das Computerprogramm nach Anspruch 7 auf dem Datenträger aufgezeichnet ist.

## Claims

1. Method for compensating for resistive forces (Fᵣₑₛ) applied to a vehicle (V) comprising an electric motor, the method comprising the following steps:
- converting (step 1) a value (X) representative of the depression of an accelerator pedal into a reference force (F_{ref}) ;
- applying (step 3) the reference force (F_{ref}) to at least one driving wheel of the vehicle (V);
- determining (step 5) a reference acceleration (α_{ref}) by dividing the reference force (F_{ref}) by the mass (m) of the vehicle (V);
- measuring (step 7) the effective acceleration (α_{eff}) of the vehicle (V);
- calculating (step 9) a corrective force (F_{Corr}) on the basis of the reference and effective accelerations (α_{ref} ; α_{eff} ) ; and
- applying (step 11) the corrective force (F_{Corr}) to said wheel;
the method being **characterized in that** the step (11) of applying the corrective force (F_corr) to the wheel is subject to at least one condition comprising the attainment of a particular value representative of depression of a brake pedal and/or the attainment of a particular traction state of the vehicle and/or the activation of a particular driving assistance mode, and **in that** the method comprises, if the at least one condition is not met, a step of resetting the value of the applied corrective force to zero and a step (23) of storing the last non-zero value of the applied corrective force, this last non-zero value (F_mem) being applied again once the at least one condition is met again.

2. Method according to Claim 1, wherein the calculation step (9) comprises a sub-step (13) of determining an acceleration error (e) by subtraction between the reference acceleration (α_{ref}) and the effective acceleration (α_{eff}).

3. Method according to Claim 2, wherein the calculation step (9) comprises a sub-step (15) of filtering the reference and effective accelerations (α_{ref}; α_{eff}) before the sub-step (13) of determining an acceleration error (e).

4. Method according to either of Claims 2 and 3, wherein the calculation step (9) comprises a sub-step (17) of calculating the corrective force (F_{corr}) on the basis of the acceleration error (e) and using a PID controller and/or a fuzzy controller and/or an MPC controller.

5. Method according to any one of Claims 1 to 4, comprising a step (25) of detecting a change in direction of the gear lever of the vehicle (V) so as to switch from forwards running to backwards running or vice versa, and a step (27) of applying a factor -1 to the corrective force (F_{corr}) when such a change in direction is detected.

6. Method according to any one of Claims 1 to 5, wherein the calculation step (9) comprises a sub-step (19) of limiting the value of the corrective force (F_{corr}) as a function of the speed and/or the acceleration of the vehicle.

7. Computer program comprising instructions which, when the program is executed by a computer, cause said program to implement the steps of the method according to any one of Claims 1 to 6.

8. Motor vehicle (V) comprising a computer and a computer-readable data medium, the computer program according to Claim 7 being recorded on the data medium.
